# FASCICULE DE BREVET EUROPEEN

(11) **EP 2 216 663 B1**
(45) Date de publication et mention de la délivrance du brevet: **19.10.2011**
(21) Numéro de dépôt: 10152313.2
(22) Date de dépôt: 01.02.2010
(51) Int. Cl.: G02B 6/30, G02B 6/42

(54) **Structure et procédé d'alignement d'une fibre optique et d'un guide d'ondes submicronique**
Struktur und Verfahren zur Justierung einer optischen Faser mit einem sub-mikronischen Lichtwellenleiter
Structure and method of aligning an optical fibre with a sub-micronic optical waveguide

(30) Priorité: 09.02.2009 FR 0950779
(43) Date de publication de la demande: 11.08.2010
(73) Titulaire: Commissariat à l'Énergie Atomique et aux Énergies Alternatives, 75015 Paris (FR)
(72) Inventeur: Kopp, Christophe, 38120 Fontanil-Cornillon (FR)
(74) Mandataire: de Beaumont, Michel

(56) Documents cités:
- GB-A- 2 385 678
- US-A- 4 760 569
- US-A1- 2005 046 928
- US-A1- 2005 207 723
- US-A1- 2008 124 026

## Description

### Domaine de l'invention

La présente invention concerne un circuit optique intégré. Plus particulièrement, la présente invention concerne un dispositif et un procédé permettant l'alignement d'une fibre optique et d'un guide d'ondes submicronique d'un circuit optique intégré.

### Exposé de l'art antérieur

Les circuits optiques intégrés sont de plus en plus utilisés dans le domaine des télécommunications, notamment pour la transmission, le traitement ou le stockage de données. Les circuits optiques intégrés peuvent avoir de nombreuses fonctions, par exemple de multiplexage, de démultiplexage, de modulation, de démodulation, de routage spectral, d'amplification, d'accumulation, de filtrage, de résonateur...

Les circuits optiques ou optoélectroniques intégrés sont généralement formés dans et sur des plaquettes semiconductrices similaires à celles utilisées en microélectronique. Un circuit optique intégré comprend un ou plusieurs composants optiques élémentaires réalisant un traitement sur un ou plusieurs faisceaux lumineux, les faisceaux lumineux étant acheminés entre les composants optiques élémentaires par des guides d'ondes optiques.

L'intégration de plus en plus de fonctions sur une même puce nécessite une miniaturisation des composants optiques intégrés et des guides d'ondes optiques associés. Lorsque les guides d'ondes ont des dimensions inférieures au micromètre, on parle de guides d'ondes submicroniques ou nanométriques. Actuellement, de tels guides d'ondes peuvent avoir des sections de l'ordre de 0,5 x 0,2 µm².

Pour des transmissions à moyennes et longues distances, c'est-à-dire de quelques mètres à plusieurs kilomètres, le moyen de transport optique privilégié est la fibre optique. Une fibre optique utilisable dans le domaine du visible et du proche infrarouge a couramment un diamètre compris entre 10 µm et quelques dizaines de micromètres. Par conséquent, il est nécessaire d'utiliser des dispositifs de couplage spécifiques entre les fibres optiques et les guides d'ondes submicroniques pour que les faisceaux lumineux circulent correctement entre ces structures de dimensions différentes.

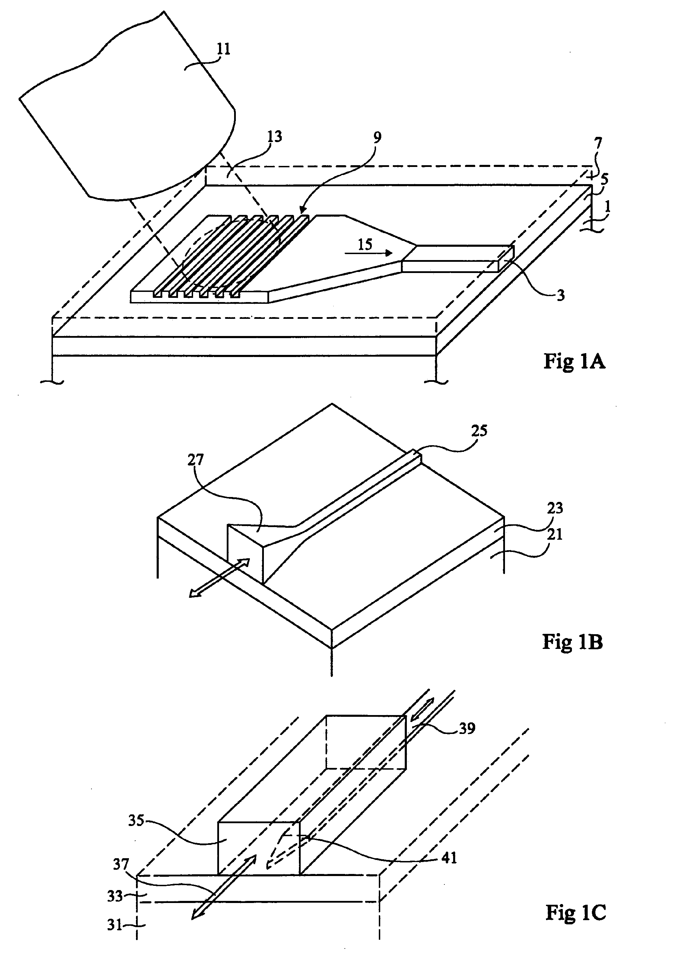

Les figures 1A à 1C illustrent différents dispositifs connus de couplage entre une fibre optique et un guide d'ondes submicronique d'un circuit optique intégré.

En figure 1A, au-dessus d'un support 1, par exemple en silicium, est formé un guide d'ondes submicronique comprenant un coeur 3 entouré de couches inférieure 5 et supérieure 7 d'indices différents formant gaine optique. Les couches inférieure 5 et supérieure 7 sont par exemple en oxyde de silicium et le coeur 3 par exemple en silicium. La différence d'indice optique entre les matériaux du coeur et de la gaine du guide d'ondes permet le confinement de faisceaux lumineux dans le coeur du guide d'ondes 3.

Un réseau de diffraction 9 est formé en surface du coeur 3. Le réseau de diffraction 9 est par exemple constitué d'un ensemble d'ouvertures rectangulaires, parallèles entre elles. On peut prévoir, comme cela est représenté, d'élargir le guide d'ondes submicronique au niveau du réseau de diffraction pour permettre un meilleur couplage. Une fibre optique 11, dont une des extrémités est placée en regard du réseau de diffraction 9, délivre un faisceau lumineux 13 en direction du réseau de diffraction 9. Lorsque la fibre optique 11 éclaire convenablement le réseau de diffraction 9 (bon alignement), un faisceau lumineux (flèche 15) circule dans le guide d'ondes. On notera que la structure de la figure 1A peut également être utilisée pour transmettre un faisceau lumineux provenant d'un circuit optique intégré en direction de la fibre optique 11 par l'intermédiaire du coeur du guide d'ondes 3.

En figure 1B est représenté un support 21, par exemple en silicium, sur lequel s'étend une couche 23, par exemple en oxyde de silicium, formant une portion inférieure d'une gaine optique. Sur la couche 23 s'étend le coeur d'un guide d'ondes submicronique 25. On notera que les éléments situés au-dessus du coeur du guide d'ondes 25, la couche supérieure de la gaine optique par exemple, ne sont pas représentés en figure 1B. Le coeur du guide d'ondes submicronique 25 s'élargit, en surface de la couche 23, pour former une région plus large 27 à l'aplomb d'un bord de la structure. Le couplage d'une fibre optique et du guide d'ondes est obtenu en alignant la fibre optique sur la région large 27. Le rétrécissement de la région large 27 permet le confinement progressif du faisceau lumineux fourni par la fibre dans le coeur du guide d'ondes 25. Un dispositif tel que celui de la figure 1B est couramment appelé dispositif anamorphoseur (en anglais "taper").

La figure 1C est une vue en perspective illustrant une autre structure de couplage anamorphoseuse inverse, c'est-à-dire en forme de cône inversé, couramment désignée dans la technique par l'expression anglo-saxonne "inverse taper".

La structure de la figure 1C est formée sur un support de silicium 31 recouvert d'une couche 33, par exemple en oxyde de silicium, formant une partie inférieure d'une gaine optique. Sur la couche 33 est formé le coeur d'un guide d'ondes large 35, par exemple en oxyde de silicium SiOₓ ayant un indice optique compris entre 1,6 et 1,8. Le coeur 35 a typiquement une section ayant des dimensions de l'ordre de quelques micromètres, par exemple de 3 µm de largeur et de 1 µm de hauteur, et est destiné à être éclairé (faisceau représenté en figure 1C par une flèche 37) par une fibre optique par une première de ses extrémités sensiblement à l'aplomb d'un bord du support 31. Le coeur d'un guide d'ondes submicronique 39, formé en surface de la couche 33, s'étend dans le coeur du guide d'ondes large 35 et s'y rétrécit de façon progressive pour former une pointe 41 du côté de la première extrémité du coeur du guide d'ondes large 35. Le coeur 39 et la pointe 41 peuvent être en silicium. On notera qu'une couche d'indice approprié formant la partie supérieure de la gaine optique, non représentée et par exemple en oxyde de silicium, s'étend sur les coeurs 35 et 39 des guides d'ondes pour permettre le confinement des faisceaux lumineux dans ces guides d'ondes. En fonctionnement normal, un faisceau lumineux de longueur d'onde et de polarisation adaptées pénétrant dans le coeur du guide d'ondes large 35 passe dans le coeur du guide d'ondes submicronique 39.

Pour qu'un circuit optique fonctionne correctement et que la lumière soit couplée entre une fibre optique et un guide d'ondes submicronique d'un circuit optique intégré, il est nécessaire que la fibre optique soit parfaitement alignée avec le dispositif de couplage qui lui est associé.

Plusieurs méthodes ont été proposées pour réaliser cet alignement. Par exemple, le circuit optique intégré peut être prévu pour fournir un faisceau lumineux en direction du dispositif de couplage, et l'alignement de la fibre optique est obtenu lorsque la quantité de lumière qu'elle transporte est maximale. On peut également prévoir de former un dispositif photodétecteur dans le circuit optique intégré pour détecter la position de la fibre permettant le transport d'un maximum d'intensité lumineuse en direction du circuit optique (voir par exemple les documents US 2005 0207723 et US 2008 0124026).

Cependant, ces méthodes ont l'inconvénient de nécessiter la présence, dans tout circuit optique intégré, d'éléments dédiés à l'alignement des fibres optique, par exemple des dispositifs d'éclairement ou des photodétecteurs. De plus, lors de l'alignement, le circuit optique intégré doit être en fonctionnement et nécessite donc une alimentation.

Un besoin existe d'un dispositif et d'un procédé permettant l'alignement d'une fibre optique et d'un guide d'ondes submicronique associé à un circuit optique, indépendamment du circuit optique intégré et de son fonctionnement.

### Résumé

Un objet d'un mode de réalisation de la présente invention est de prévoir un procédé permettant l'alignement d'une fibre optique et d'un guide d'ondes submicronique associé à un circuit optique intégré.

Un objet d'un mode de réalisation de la présente invention est de prévoir un procédé dans lequel les éléments permettant l'alignement sont neutralisés une fois l'alignement réalisé.

Un objet d'un mode de réalisation de la présente invention est de prévoir un procédé ne nécessitant pas d'étapes supplémentaires par rapport aux procédés connus.

Ainsi, un mode de réalisation de la présente invention prévoit un procédé d'alignement d'une fibre optique et d'un guide d'ondes submicronique d'un circuit optique intégré, le guide d'ondes comportant un coeur entouré de couches supérieure et inférieure formant gaine optique, le procédé comprenant les étapes suivantes :
(a) former, dans la couche supérieure, une ou plusieurs ouvertures adaptées à extraire de la lumière du guide d'ondes ;
(b) positionner la fibre optique grossièrement pour envoyer de la lumière dans le guide d'ondes ;
(c) déplacer finement la fibre optique par rapport au guide d'ondes et détecter la position entraînant l'extraction d'un maximum de lumière au niveau de la ou des ouvertures ; et
(d) déposer une colle ayant un indice optique voisin de l'indice optique de la couche supérieure fixant la fibre optique au circuit optique et remplissant la ou les ouvertures.

Selon un mode de réalisation de la présente invention, l'indice optique de la colle est compris entre 0,95 et 1,05 fois l'indice optique de la couche supérieure.

Selon un mode de réalisation de la présente invention, l'étape (b) consiste à positionner la fibre optique de façon qu'elle éclaire un dispositif de couplage optique associé au guide d'ondes.

Selon un mode de réalisation de la présente invention, les ouvertures forment un réseau de diffraction.

Selon un mode de réalisation de la présente invention, le procédé comprend en outre une étape de formation, dans la couche supérieure, d'une cavité en contact avec les ouvertures, la colle étant déposée dans la cavité et pénétrant dans le réseau de diffraction par capillarité.

Selon un mode de réalisation de la présente invention, une unique ouverture à parois inclinées est formée dans la couche supérieure.

Selon un mode de réalisation de la présente invention, la couche supérieure est en oxyde de silicium, le coeur est en silicium et la colle a un indice optique compris entre 1,40 et 1,48.

Un mode de réalisation de la présente invention prévoit en outre un dispositif optique comprenant :
une fibre optique alignée avec un guide d'ondes submicronique d'un circuit optique intégré, le guide d'ondes comportant un coeur entouré de couches supérieure et inférieure formant gaine optique, la fibre optique étant maintenue en position par une colle dont l'indice optique est compris entre 0,95 et 1,05 fois l'indice de la couche supérieure ; et
une ou plusieurs ouvertures formées dans la couche supérieure, la ou les ouvertures étant remplies de ladite colle.

Selon un mode de réalisation de la présente invention, la couche supérieure est en oxyde de silicium et le coeur est en silicium.

Selon la présente invention, les ouvertures forment un réseau de diffraction dans la couche supérieure.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
les figures 1A à 1C, précédemment décrites, illustrent différentes structures de couplage connues entre une fibre optique et un guide d'ondes submicronique ;
les figures 2A et 2B illustrent deux étapes d'un procédé d'alignement selon un mode de réalisation de la présente invention ; et
les figures 3 et 4 illustrent deux variantes d'un mode de réalisation de la présente invention.

Par souci de clarté, de mêmes éléments ont été désignés par de mêmes références aux différentes figures et, de plus, comme cela est habituel dans la représentation des circuits optiques intégrés, les diverses figures ne sont pas tracées à l'échelle.

### Description détaillée

Les inventeurs proposent un procédé permettant d'aligner une fibre optique sur un guide d'onde submicronique qui comprend une étape permettant de neutraliser les éléments destinés à réaliser l'alignement, une fois celui-ci réalisé.

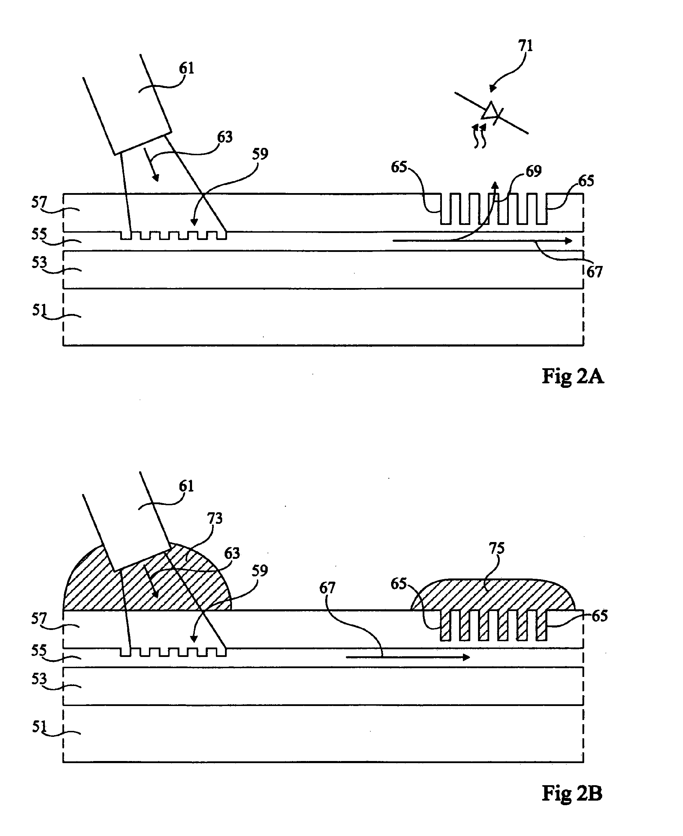

Les figures 2A et 2B illustrent deux étapes d'un procédé d'alignement d'une fibre optique sur un guide d'ondes submicronique.

En figure 2A, on considère un dispositif comprenant un support 51, par exemple en silicium, sur lequel est formée une couche 53 qui constitue une couche inférieure d'une gaine optique. Sur la couche inférieure 53 est formé le coeur d'un guide d'onde submicronique 55 entouré et recouvert d'une couche 57 formant une couche supérieure de la gaine optique.

Dans la suite de la description, les différents modes de réalisation sont décrits en relation avec une structure comprenant un dispositif de couplage entre la fibre optique et le guide d'ondes submicronique constitué d'un réseau de diffraction. On notera que le procédé décrit ici pourra également s'appliquer à des structures dans lesquelles le dispositif de couplage est différent d'un réseau de diffraction, par exemple un dispositif anamorphoseur ou anamorphoseur inverse. De plus, on notera que, dans la description, bien que l'alignement soit réalisé entre la fibre optique et le dispositif de couplage, on parle généralement d'alignement entre la fibre optique et le guide d'ondes submicronique.

En surface du coeur du guide d'ondes submicronique 55 est formé un réseau de diffraction 59 qui permet le couplage entre une fibre optique 61 et le guide d'ondes submicronique. La fibre optique 61 délivre un faisceau lumineux 63 en direction du réseau de diffraction 59. Initialement, on positionne grossièrement la fibre optique 61 pour que le faisceau lumineux 63 atteigne le réseau de diffraction. L'alignement précis de la fibre optique 61 et du réseau de diffraction 59 s'effectue lors d'une étape ultérieure. De préférence, l'extrémité de la fibre optique est placée selon une direction formant un angle compris entre 0° et 15° par rapport à la normale à la surface de la couche supérieure 57.

Le réseau de diffraction 59 peut être constitué d'un ensemble d'ouvertures parallèles entre elles formées en surface du coeur du guide d'ondes submicronique 55. De préférence, le coeur du guide d'ondes submicronique 55 s'élargit au niveau du réseau de diffraction 59 pour permettre un bon couplage entre la fibre optique et le guide d'ondes submicronique. A titre de variante, le réseau de diffraction 59 peut être constitué d'un ensemble de bandes métalliques parallèles entre elles formées en surface de la partie large du coeur du guide d'ondes submicronique 55.

En surface de la couche supérieure 57, de préférence au-dessus de la partie élargie du coeur du guide d'ondes submicronique 55 ou de la partie de raccordement entre cette partie élargie et le guide d'ondes, sont formées des tranchées 65. Les tranchées 65 s'étendent dans la couche supérieure 57 jusqu'au voisinage du coeur du guide d'ondes submicronique 55. L'arrêt des tranchées dans la couche supérieure 57 a l'avantage de ne pas dégrader le fonctionnement du coeur du guide d'ondes submicronique 55 une fois l'alignement réalisé. Cependant, on pourra également prévoir de prolonger les tranchées 65 jusqu'à contacter le coeur du guide d'ondes submicronique 55.

Lors de la première étape, la fibre optique 61 est alignée grossièrement sur le réseau de diffraction 59 et une partie du faisceau lumineux 63 est transmis dans le coeur du guide d'onde submicronique 55, par l'intermédiaire du réseau de diffraction 59. Cette transmission est représentée en figure 2A par une flèche 67. La présence des tranchées 65 permet une extraction d'une partie de la lumière du faisceau lumineux 67 (flèche 69) vers l'extérieur de la structure.

Lorsque la fibre optique est parfaitement alignée avec le réseau de diffraction, la quantité de lumière 67 transportée dans le coeur du guide d'onde optique 55 est maximale. Plus la lumière 67 transportée dans le coeur du guide d'ondes submicronique est importante, plus la lumière 69 sortant des tranchées 65 est importante.

Ainsi, le bon alignement de la fibre optique 61 et du guide d'ondes submicronique dépend directement de la quantité de lumière 69 extraite du coeur du guide d'ondes 55 par les tranchées 65. Pour réaliser l'alignement précis, un dispositif photodétecteur 71, par exemple une photodiode, est placé en regard des tranchées 65. Le dispositif photodétecteur 71 permet de déterminer la position de la fibre optique 61 permettant une extraction de lumière 69 maximale et donc le meilleur couplage avec le guide d'ondes submicronique.

La figure 2B illustre le résultat d'une étape réalisée une fois le bon alignement de la fibre optique 61 et du réseau de diffraction 59 obtenu. Une colle 73 est déposée au niveau de l'extrémité de la fibre optique 61 pour permettre son maintien en position. La colle 73 est en un matériau dont l'indice optique est voisin de l'indice optique de la couche supérieure 57, par exemple compris entre 0,95 et 1,05 fois cet indice. Ainsi, la colle n'a pas d'influence sur les faisceaux lumineux circulant entre la fibre optique et le guide d'ondes submicronique.

Un autre point de colle 75 est déposé dans les tranchées 65. Avantageusement, la colle 75 est déposée lors de la même étape que la colle 73. Ainsi, puisque qu'il est classique de fixer en position les fibres optiques une fois leur alignement réalisé, le procédé présenté ici ne nécessite pas d'étapes supplémentaires par rapport aux procédés connus. La colle 75 pénètre, à partir de la surface supérieure de la couche supérieure 57, dans les tranchées 65 pour les remplir.

Ainsi, on obtient une structure comprenant une fibre optique 61 correctement alignée avec un guide d'ondes submicronique et dans laquelle les tranchées 65, comblées de colle 75, n'influent plus sur le fonctionnement du dispositif (extraction de lumière 69 nulle). Le dispositif fonctionne alors normalement, sans perte de lumière au niveau des tranchées 65, et l'ensemble du faisceau lumineux couplé par le réseau de diffraction 59 est transporté par le coeur du guide d'ondes submicronique 55 vers un circuit optique intégré. En d'autres termes, le dispositif d'extraction utilisé pour l'alignement est neutralisé une fois l'alignement réalisé.

A titre d'exemple de valeurs numériques, l'extrémité de la fibre optique 61 la plus proche de la couche supérieure 57 est placée à environ 5 µm de la surface de la couche supérieure 57. La colle 73 est déposée sur une épaisseur comprise entre 10 µm et 20 µm pour un maintien en position de l'extrémité de la fibre optique 61 correct. La couche inférieure 53 pourra avoir une épaisseur de l'ordre de 2 µm, la couche supérieure 57 de 0,5 µm et le coeur du guide d'ondes submicronique 55 pourra avoir une épaisseur de l'ordre de 0,4 µm. Les tranchées 65 peuvent avoir une période de l'ordre de 0,5 µm avec un taux de remplissage de 50 %. Ces dimensions des tranchées 65 permettent une extraction de lumière 69 de l'ordre de 0,5 % de la lumière guidée par le coeur du guide d'onde submicronique 55 pour un faisceau lumineux ayant une longueur d'onde de 1,55 µm.

Le coeur du guide d'onde submicronique 55 pourra être en silicium (indice optique égal à 3,44) et les couches inférieure 53 et supérieure 57 en oxyde de silicium (indice optique égale à 1,44). Pour former cette structure, on pourra utiliser tout substrat sur isolant connu (substrat de type SOI). La colle 73 et 75 peut être en n'importe quel matériau adhésif ayant un indice optique compris entre 1,40 et 1,48, par exemple en époxy, en silicone ou en acrylate.

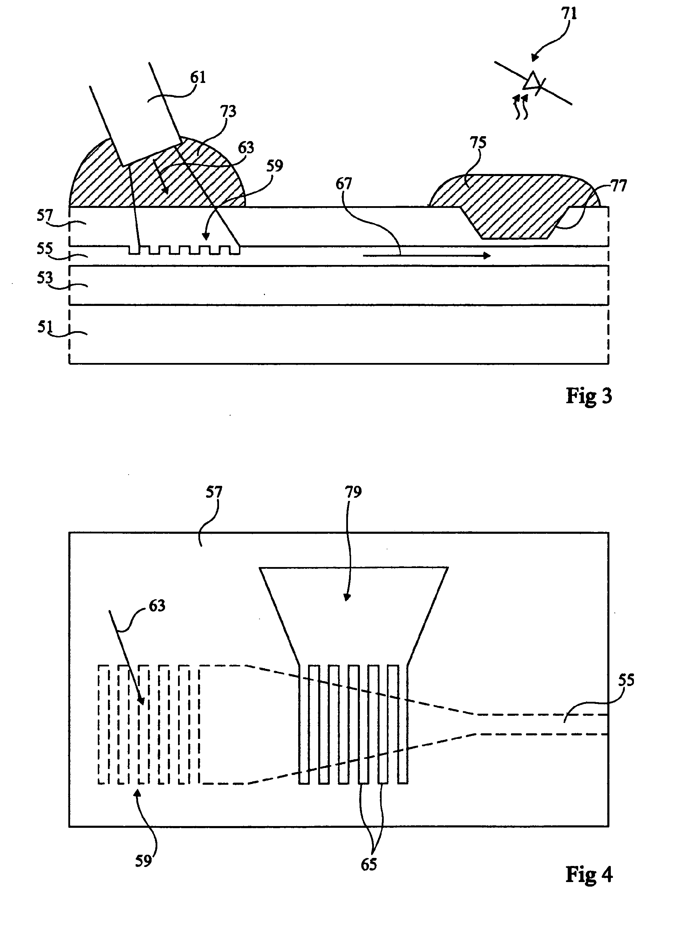

Les figures 3 et 4 illustrent deux variantes de réalisation du procédé présenté ci-dessus.

La figure 3 illustre une étape finale obtenue à partir d'une variante dans laquelle les principaux éléments du dispositif sont identiques à ceux de la figure 2B. Les tranchées 65 sont remplacées par une unique ouverture 77 formée dans la couche supérieure 57, au-dessus du coeur du guide d'onde submicronique 55. De préférence, les parois de l'ouverture 77 sont inclinées, l'ouverture s'élargissant vers l'extérieur. A l'étape finale représentée, l'alignement de la fibre optique 61 a été réalisé et la colle 75 a été déposée dans l'ouverture 77 pour la remplir complètement. Ceci empêche le passage d'un faisceau lumineux, provenant du coeur du guide d'ondes submicronique 55 dans l'ouverture 77. On notera qu'une unique ouverture à parois inclinées telle que l'ouverture 77 permet une extraction de lumière moins importante qu'un ensemble d'ouvertures parallèles telles que les tranchées 65 des figures 2A et 2B, mais ceci sera suffisant dans de nombreux cas.

La figure 4 est une vue de dessus d'une structure sensiblement identique à celle de la figure 2A. Un faisceau lumineux 63 provenant d'une fibre optique (non représentée) éclaire un réseau de diffraction 59 formé en surface d'une portion élargie du coeur d'un guide d'onde submicronique 55. Le réseau de diffraction 59 et le coeur du guide d'ondes submicronique 55 sont recouverts d'une couche supérieure 57. Des tranchées 65 sont formées en surface de la couche supérieure 57. Dans la variante représentée, une cavité 79 est formée, dans la couche supérieure 57, sur un côté des tranchées 65 et les contacte. La cavité 79 permet d'aider au comblement des tranchées 65 par la colle 75. En effet, pour réaliser le dépôt de la colle 75, on dépose celle-ci dans la cavité 79 et, par capillarité, la colle pénètre dans les tranchées 65 et les remplit.

Des modes de réalisation particuliers ont été décrits. Diverses variantes et modifications apparaîtront à l'homme de l'art. En particulier, on notera que, bien que le dispositif de couplage représenté en figures 2A, 2B, 3 et 4 entre la fibre optique et le guide d'onde submicronique soit un réseau de diffraction, le procédé décrit ici pourra également être utilisé en relation avec d'autres dispositifs de couplage, par exemple un dispositif anamorphoseur ou anamorphoseur inverse. Dans le cas d'un dispositif anamorphoseur, on prévoira, de la même façon que décrit ci-dessus, une ou plusieurs ouvertures dans la portion supérieure de la gaine optique entourant le coeur du guide d'ondes submicronique. La seule différence avec les structures présentées en relation avec les figures est que la fibre optique est alignée sur un des côtés du support comprenant le guide d'ondes submicronique, et donc que la colle 73 est déposée sur la tranche de ce support.

De plus, on pourra former des structures similaires à celles présentées ici à l'aide de matériaux de coeur et de gaine différents de ceux donnés à titre d'exemple dans cette description.

## Revendications

1. Procédé d'alignement d'une fibre optique (61) et d'un guide d'ondes submicronique d'un circuit optique intégré, le guide d'ondes comportant un coeur (55) entouré de couches supérieure (57) et inférieure (53) formant gaine optique, comprenant les étapes suivantes :
(a) former, dans la couche supérieure (57), une ou plusieurs ouvertures (65 ; 77) adaptées à extraire de la lumière du guide d'ondes ;
(b) positionner la fibre optique (61) grossièrement pour envoyer de la lumière dans le guide d'ondes ;
(c) déplacer finement la fibre optique (61) par rapport au guide d'ondes et détecter la position entraînant l'extraction d'un maximum de lumière au niveau de la ou des ouvertures (65 ; 77) ; et
(d) déposer une colle (73, 75) ayant un indice optique vosin de l'indice optique de la couche supérieure (57) fixant la fibre optique au circuit optique et remplissant la ou les ouvertures (65; 77).

2. Procédé selon la revendication 1, dans lequel l'indice optique de la colle (73, 75) est compris entre 0,95 et 1,05 fois l'indice optique de la couche supérieure (57).

3. Procédé selon la revendication 1 ou 2, dans lequel l'étape (b) consiste à positionner la fibre optique de façon qu'elle éclaire un dispositif de couplage optique (59) associé au guide d'ondes.

4. Procédé selon l'une quelconque des revendications 1 à 3, dans lequel les ouvertures (65) forment un réseau de diffraction.

5. Procédé selon la revendication 4, comprenant en outre une étape de formation, dans la couche supérieure (57), d'une cavité (79) en contact avec les ouvertures (65), la colle (75) étant déposée dans la cavité et pénétrant dans le réseau de diffraction par capillarité.

6. Procédé selon l'une quelconque des revendications 1 à 3, dans lequel une unique ouverture (77) à parois inclinées est formée dans la couche supérieure (57).

7. Procédé selon l'une quelconque des revendications 1 à 6, dans lequel la couche supérieure (57) est en oxyde de silicium, le coeur (55) est en silicium et la colle (73, 75) a un indice optique compris entre 1,40 et 1,48.

8. Dispositif optique comprenant :
une fibre optique (61) alignée avec un guide d'ondes submicronique d'un circuit optique intégré, le guide d'ondes comportant un coeur (55) entouré de couches supérieure (57) et inférieure (53) formant gaine optique, la fibre optique étant maintenue en position par une colle (73) dont l'indice optique est compris entre 0,95 et 1,05 fois l'indice de la couche supérieure (57) ; et
une ou plusieurs ouvertures (65 ; 77) formées dans la couche supérieure (57), la ou les ouvertures étant remplies de ladite colle (75), lesdites ouvertures formant un réseau de diffraction dans la couche supérieure (57).

9. Dispositif selon la revendication 8, dans lequel la couche supérieure (57) est en oxyde de silicium et le coeur (55) est en silicium.

## Claims

1. A method for aligning an optical fiber (61) and a submicronic waveguide of an integrated optical circuit, the waveguide comprising a core (55) surrounded with upper (57) and lower (53) layers forming an optical cladding, comprising the steps of:
(a) forming, in the upper layer (57), one or several openings (65; 77) capable of extracting light from the waveguide;
(b) roughly positioning the optical fiber (61) to send light into the waveguide;
(c) finely moving the optical fiber (61) with respect to the waveguide and detecting the position causing the extraction of a maximum amount of light at the level of the opening(s) (65; 77); and
(d) depositing a glue (73, 75), having an optical index close to the optical index of the upper layer (57) binding the optical fiber to the optical circuit and filling the opening(s) (65; 77).

2. The method of claim 1, wherein the optical index of the glue (73, 75) ranges between 0.95 and 1.05 times the optical index of the upper layer (57).

3. The method of claim 1 or 2, wherein step (b) comprises positioning the optical fiber so that it illuminates an optical coupling device (59) associated with the waveguide.

4. The method of any of claims 1 to 3, wherein the openings (65) form a diffraction grating.

5. The method of claim 4, wherein the method further comprises a step of forming, in the upper layer (57), a cavity (79) in contact with the openings (65), the glue (75) being deposited in the cavity and penetrating into the diffraction grating by capillarity.

6. The method of any of claims 1 to 3, wherein a single opening (77) with inclined walls is formed in the upper layer (57).

7. The method of any of claims 1 to 6, wherein the upper layer (57) is made of silicon oxide, the core (55) is made of silicon, and the glue (73, 75) has an optical index ranging between 1.40 and 1.48.

8. An optical device comprising:
an optical fiber (61) aligned with a submicronic waveguide of an integrated optical circuit, the waveguide comprising a core (55) surrounded with upper (57) and lower (53) layers forming an optical cladding, the optical fiber being maintained in its position by a glue (73) having an optical index ranging between 0.95 and 1.05 times the index of the upper layer (57); and
one or several openings (65; 77) formed in the upper layer (57), the opening(s) being filled with said glue (75), said openings forming a diffraction grating in the upper layer (57).

9. The device of claim 8, wherein the upper layer (57) is made of silicon oxide and the core (55) is made of silicon.

## Patentansprüche

1. Ein Verfahren zum Ausrichten einer optischen Faser (61) und ein Submikron-Wellenleiter eines integrierten optischen Schaltkreises, wobei der Wellenleiter einen Kern (55) aufweist, der umgeben ist von oberen (57) und unteren (53) Schichten, die eine optische Hülle bilden, wobei das Verfahren die folgenden Schritte aufweist:
(a) Ausbilden, in der oberen Schicht (57), von einer oder mehreren Öffnungen (65; 77), die geeignet sind Licht von dem Wellenleiter zu extrahieren;
(b) grobes Positionieren der optischen Faser (61), um Licht in den Wellenleiter zu senden;
(c) genaues Bewegen der optischen Faser (61) bezüglich des Wellenleiters und Detektieren der Position, die das Extrahieren des maximalen Betrags von Licht auf der Höhe der Öffnung(en) (65; 77) verursacht; und
(d) Aufbringen eines Klebers (73, 75) mit einem Brechungsindex nahe dem Brechungsindex der oberen Schicht (57), der die optische Faser mit dem optischen Schaltkreis verbindet und die Öffnung(en) (65; 77) füllt.

2. Das Verfahren nach Anspruch 1, wobei der Brechungsindex des Klebers (73, 75) im Bereich von 0,95 bis 1,05 mal den Brechungsindex der oberen Schicht (57) liegt.

3. Das Verfahren nach Anspruch 1 oder 2, wobei der Schritt (b) das Positionieren der optischen Faser aufweist, so, dass sie eine optische Verbindungsvorrichtung (59) beleuchtet, die mit dem Wellenleiter assoziiert ist.

4. Das Verfahren nach einem der Ansprüche 1 bis 3, wobei die Öffnungen (65) ein Beugungsgitter bilden.

5. Das Verfahren nach Anspruch 4, wobei das Verfahren ferner einen Schritt des Ausbildens eines Hohlraums (79) in der oberen Schicht (57) aufweist, die in Kontakt mit den Öffnungen (65) ist, wobei der Kleber (75) in den Hohlraum eingebracht wird und durch Kapillarwirkung in das Beugungsgitter eindringt.

6. Das Verfahren nach einem der Ansprüche 1 bis 3, wobei eine einzelne Öffnung (77) mit geneigten Wänden in der oberen Schicht (57) ausgebildet ist.

7. Das Verfahren nach einem der Ansprüche 1 bis 6, wobei die obere Schicht (57) aus Siliziumoxid besteht, der Kern (55) aus Silizium besteht und der Kleber (73, 75) einen Brechungsindex im Bereich von 1,40 und 1,48 aufweist.

8. Eine optische Vorrichtung, wobei die Vorrichtung Folgendes aufweist:
eine optische Faser (61), die mit einem Submikron- Wellenleiter eines integrierten optischen Schaltkreises ausgerichtet ist, wobei der Wellenleiter einen Kern (55) aufweist, der umgeben ist von oberen (57) und unteren (53) Schichten, die eine optische Hülle bilden, wobei die optische Faser in ihrer Position durch einen Kleber (73) gehalten wird, der einen Brechungsindex im Bereich von 0,95 bis 1,05 mal den Brechungsindex der oberen Schicht (57) aufweist; und
eine oder mehrere Öffnungen (65; 77), die in der oberen Schicht (57) ausgebildet sind, wobei die Öffnung(en) mit dem Kleber (75) gefüllt sind,
und wobei die Öffnungen ein Beugungsgitter in der oberen Schicht (57) ausbilden.

9. Die Vorrichtung nach Anspruch 8, wobei die obere Schicht (57) aus Siliziumoxid besteht und der Kern (55) aus Silizium besteht.
